# DEMANDE DE BREVET EUROPEEN

(11) **EP 3 288 156 A1**
(43) Date de publication de la demande: **28.02.2018**
(21) Numéro de dépôt: 17167976.4
(22) Date de dépôt: 12.09.2013
(51) Int. Cl.: H02K 1/27

(54) **MACHINE ÉLECTRIQUE**

(30) Priorité: 13.09.2012 FR 1258587
(62) Demande divisionnaire de: 13795859.1
(71) Demandeur: Moteurs Leroy-Somer, 16915 Angouleme Cedex 9 (FR)
(72) Inventeur: KOECHLIN, Samuel, 16000 ANGOULEME (FR)
(74) Mandataire: Nony

(57) **Abrégé**

La présente invention concerne un rotor de machine électrique tournante, comportant une masse rotorique (2) dans laquelle sont ménagés des logements (3) de manière à définir les pôles (4) du rotor, notamment au moins trois logements par pôle, chaque pôle ayant un axe radial du pôle,
les logements (3) étant de forme allongée et comportant chacun deux petits côtés, les logements étant disposés en une ou plusieurs rangées par pôle, une rangée comportant au moins deux, voire au moins trois logements (3) disposés consécutivement, leurs petits côtés définissant entre deux logements consécutifs d'une même rangée un pont de matière, ce pont de matière s'étendant généralement selon un axe longitudinal (2) du pont orienté
en rapprochement de l'axe radial du pôle correspondant du rotor, lorsque l'on s'éloigne de l'axe de rotation.

## Description

La présente invention concerne les machines électriques tournantes et notamment celles comportant un rotor à concentration de flux, et plus particulièrement les rotors de telles machines.

On connaît des machines électriques tournantes comportant un rotor qui comporte des aimants disposés dans des logements de manière à définir des pôles du rotor. Les logements peuvent être en forme d'arc de cercle ou de V. Ils sont séparés de l'entrefer par des ponts de matière orientés circonférentiellement, qui permettent de maintenir la cohésion du rotor contre les efforts mécaniques que subit la machine.

De telles machines sont connues par exemple par les brevets EP 0746079, US 6 121 706, US 6 630 762, US 7 779 153, ainsi que par les demandes EP 1 763 121, US 2002/0175584 et WO 2008/123086.

Afin d'améliorer la cohésion de la machine à l'encontre des efforts centrifuges, il est également connu de ménager des ponts radiaux entre les logements. Ces ponts sont, par exemple comme dans le brevet US 6 630 762, disposés le long d'un axe radial du pôle correspondant.

Afin d'optimiser la distribution du flux magnétique dans le rotor, on cherche à limiter la taille des ponts radiaux afin de minimiser le passage du flux magnétique dans ces ponts et les pertes de flux dans le pôle.

En revanche, il est nécessaire que ces ponts radiaux aient une épaisseur suffisante pour éviter leur rupture, le rotor étant très fortement sollicité par les forces centrifuges.

Ces exigences contradictoires rendent difficile la conception du rotor.

Il existe donc un besoin pour disposer d'un rotor suffisamment solide pour résister aux efforts centrifuges tout en permettant une bonne circulation du flux et une bonne concentration de ce dernier dans les pôles.

L'invention vise à répondre à ce besoin et a ainsi pour objet, selon un premier de ses aspects, un rotor de machine électrique tournante comportant une masse rotorique dans laquelle sont ménagés des logements de manière à définir les pôles du rotor, de préférence au moins trois logements par pôle, chaque pôle ayant un axe radial du pôle, les logements étant de forme allongée et comportant chacun deux petits côtés, les logements étant disposés en une ou plusieurs rangées par pôle, une rangée comportant au moins deux, mieux au moins trois logements disposés consécutivement, leurs petits côtés définissant entre deux logements consécutifs d'une même rangée un pont de matière, ce pont de matière s'étendant généralement selon un axe longitudinal du pont orienté obliquement en rapprochement de l'axe radial du pôle correspondant du rotor, lorsque l'on se déplace en s'éloignant de l'axe de rotation.

Le rotor selon l'invention permet de concilier les exigences contradictoires précitées, c'est-à-dire d'une part la circulation du flux dans le circuit magnétique, et d'autre part la tenue mécanique du rotor. Les ponts de matière orientés obliquement mentionnés ci-dessus permettent de supporter les efforts centrifuges auxquels peut être soumis le rotor, sans pénaliser la machine sur le plan magnétique.

Ainsi, grâce à l'invention, on peut réduire la largeur du pont pour la même vitesse de rotation et obtenir une meilleure concentration du flux magnétique dans le pôle correspondant. On peut réduire les contraintes dans les ponts en équilibrant mieux les efforts de flexion, et n'obtenir sensiblement que des contraintes de traction dans ces ponts. On peut également, avec une même largeur de pont, être en mesure de faire fonctionner la machine à une vitesse de rotation plus élevée et obtenir une meilleure concentration du flux magnétique dans les pôles.

Le rotor peut comporter des aimants permanents insérés dans tout ou partie des logements, par exemple dans au moins la moitié des logements, voire dans plus des deux tiers des logements, mieux encore dans tous les logements.

Les aimants permanents peuvent être réalisés en ferrites ou avec des terres rares ou avec tout autre type de matériau magnétique. La disposition des logements permet de concentrer le flux des aimants et d'obtenir avec des aimants en ferrites des performances intéressantes. Dans un exemple de réalisation, les logements d'une même rangée sont disposés selon une branche centrale et deux branches latérales situées de part et d'autre de la branche centrale, donnant par exemple une configuration en U, la branche centrale étant par exemple seule à comporter un ou plusieurs aimants permanents, les branches latérales ne logeant pas d'aimant permanent.

Le rotor peut être dépourvu d'aimant permanent. Il s'agit dans ce cas d'un rotor de machine à réluctance.

Par « axe radial du pôle », on entend un axe du pôle orienté radialement, c'est-à-dire selon un rayon du rotor. Il peut s'agir d'un axe de symétrie pour le pôle. Cet axe radial peut intersecter le sommet du pôle.

Les ponts de matière formés entre les logements peuvent s'étendre obliquement généralement selon un axe longitudinal du pont qui peut former avec l'axe radial du pôle correspondant du rotor un angle d'une valeur non nulle et supérieure à 5°, mieux supérieure à 10°, par exemple de l'ordre d'environ 15°. L'angle peut être inférieur à 45°, mieux inférieur à 30°, voire inférieur à 20°.

Par « axe longitudinal du pont » on désigne l'axe disposé de manière centrale par rapport aux deux petits côtés des logements adjacents définissant ce pont de matière. Cet axe est de préférence rectiligne.

Pour un même pôle, les logements de ce pôle peuvent être disposés en une seule rangée. La concavité de la rangée peut être orientée vers le sommet du pôle, c'est à dire vers l'entrefer.

De préférence, pour un même pôle, les logements de ce pôle sont disposés en plusieurs rangées, chacune de concavité qui peut être orientée vers le sommet du pôle, notamment en rangées sensiblement concentriques. Par « concentriques », on entend que des axes médians des logements des rangées, pris dans un plan perpendiculaire à l'axe de rotation du rotor, se coupent en un même point. Cette disposition en plusieurs rangées concentriques permet d'améliorer la concentration du flux sans nécessairement avoir à augmenter la taille des logements ou la quantité d'aimants permanents nécessaires pour obtenir un flux équivalent. Le nombre de rangées par pôle peut notamment être de deux, trois ou quatre.

Lorsque le rotor comporte pour un même pôle plusieurs rangées, ces dernières peuvent être de longueur décroissante lorsque l'on se déplace en direction de l'entrefer, la plus longue étant plus proche de l'axe de rotation et la plus courte du côté de l'entrefer. La longueur d'une rangée correspond à la longueur cumulée des logements de cette rangée.

Au moins, deux logements de deux rangées d'un même pôle peuvent s'étendre parallèlement l'un à l'autre. Tous les logements d'une rangée peuvent s'étendre parallèlement aux logements correspondants d'une autre rangée.

Le rotor peut comporter autant de ponts de matière orientés obliquement que de rangées de logements, voire jusqu'à deux fois plus, ou même trois fois plus. Le nombre de ponts de matière orientés obliquement dans un pôle peut être égal au nombre de logements dans le pôle, auquel on soustrait le nombre de rangées dans ledit pôle.

Une rangée peut comporter un nombre de logements strictement supérieur à un, par exemple au moins deux logements, mieux trois logements. Une rangée peut par exemple comporter un logement central et deux logements latéraux. Au moins une rangée peut comporter un nombre impair de logements, par exemple au moins trois logements.

Deux rangées d'un même pôle peuvent avoir un nombre de logements différent. Dans un exemple de réalisation de l'invention, au moins un pôle comporte une rangée de logements comportant un nombre inférieur de logements à ceux d'une autre rangée de ce pôle, par exemple deux contre trois pour l'autre rangée. La rangée ayant le plus faible nombre de logements est de préférence la plus proche de l'entrefer et la plus éloignée de l'axe de rotation.

La disposition des logements et/ou des ponts de matière dans une rangée est de préférence symétrique par rapport à l'axe radial du pôle.

Dans une rangée, les logements peuvent être disposés en V ou en U, le U pouvant avoir une forme évasée vers l'entrefer. Autrement dit, les logements constituant les branches latérales du U peuvent être non parallèles entre eux. Ainsi, l'inclinaison des ponts radiaux peut être opposée à celle des logements latéraux, par rapport à l'axe radial du pôle.

Lorsque les logements d'une même rangée sont disposés selon un arrangement en forme de U, le logement central peut être de longueur supérieure ou inférieure à celle d'une branche du U. Dans un exemple de réalisation, les branches du U sont plus courtes que la branche centrale constituant le fond du U.

Les logements peuvent s'étendre chacun, lorsqu'observés en section dans un plan perpendiculaire à l'axe de rotation du rotor, selon un axe longitudinal qui peut être rectiligne ou courbe.

Les logements peuvent avoir une largeur constante ou variable lorsque l'on se déplace le long de leur axe longitudinal, dans un plan perpendiculaire à l'axe de rotation du rotor.

Les petits côtés d'un logement sont orientés en direction de l'axe radial du pôle lorsque l'on se déplace en éloignement de l'axe de rotation, et convergent par exemple sensiblement vers le sommet du pôle.

Les logements peuvent avoir, en section transversale, c'est-à-dire perpendiculairement à l'axe de rotation, une forme générale rectangulaire ou trapézoïdale, cette liste n'étant pas limitative.

Les petits côtés d'un logement peuvent être perpendiculaires aux grands côtés du logement. Les petits côtés d'un logement peuvent être inclinés par rapport aux grands côtés du logement.

Au moins un logement peut avoir deux grands côtés, l'un des grands côtés étant plus petit que l'autre. Dans ce cas, par exemple lorsque le logement est de forme générale trapézoïdale, le plus court des grands côtés peut être situé plus près de l'entrefer que le plus long des grands côtés.

Les petits côtés d'un logement peuvent être rectilignes ou courbes.

Les ponts de matière entre deux logements consécutifs d'une rangée peuvent avoir une largeur, mesurée perpendiculairement à leur axe longitudinal, inférieure à 8 mm et les ponts de matière peuvent avoir une largeur supérieure à 0,5 mm.

Les aimants permanents peuvent être de forme générale rectangulaire. Compte-tenu de la forme des logements, la mise en place des aimants dans les logements peut laisser un espace libre dans le logement entre les aimants et les petits côtés du logement correspondant. L'espace libre est par exemple de forme générale triangulaire.

Selon une variante de réalisation de l'invention, les axes longitudinaux de deux ponts de matière de deux rangées différentes d'un même pôle sont parallèles entre eux.

Ils peuvent être confondus ou, en variante, décalés d'une distance d comprise entre 0 (valeur exclue) et 10 mm. La distance d est mesurée perpendiculairement auxdits axes longitudinaux. Cette distance d peut être inférieure à un multiple de la plus grande largeur des ponts de matière correspondants, par exemple moins de trois fois, voire moins de deux fois cette plus grande largeur, voire encore inférieure à cette plus grande largeur. Un tel décalage permet de compenser les flexions introduites par les forces centrifuges.

L'invention a encore pour objet, selon un autre de ses aspects, indépendamment ou en combinaison avec ce qui précède, un rotor de machine électrique tournante comportant une masse rotorique dans laquelle sont ménagés des logements de manière à définir les pôles du rotor, de préférence au moins trois logements par pôle, chaque pôle ayant un axe radial du pôle, les logements étant de forme allongée et comportant chacun deux petits côtés, les logements étant disposés pour chaque pôle en plusieurs rangées par pôle, dont la concavité peut être orientée vers l'entrefer, une rangée comportant au moins deux, mieux au moins trois logements disposés consécutivement, leurs petits côtés définissant entre deux logements consécutifs d'une même rangée un pont de matière,
ce pont de matière s'étendant généralement selon un axe longitudinal du pont, les axes longitudinaux de deux ponts de matière appartenant à deux rangées différentes pouvant être parallèles entre eux, étant confondus ou, mieux, décalés d'une distance d comprise entre 0 (valeur exclue) et 10 mm. En variante, les axes longitudinaux de ces deux ponts de matière sont non parallèles entre eux. Ils peuvent former avec l'axe radial du pôle un angle qui varie, par exemple qui augmente lorsque l'on se rapproche de l'axe de rotation.

Il est particulièrement avantageux de procéder à un décalage des axes longitudinaux des ponts de matière, notamment lorsque les logements d'une rangée sont disposés en U et que les branches latérales de chaque U sont plus courtes que la branche centrale, ou en variante lorsque la branche centrale est la seule à comporter un aimant permanent et que les logements correspondant aux branches latérales ne comportent pas d'aimant permanent.

Le décalage des axes longitudinaux des ponts peut se faire dans ce cas vers l'axe radial du pôle lorsque l'on se rapproche de l'axe de rotation, autrement dit le décalage se fait du côté opposé de l'axe radial du pôle lorsque l'on se rapproche du sommet du pôle.

Le décalage des axes longitudinaux des ponts peut se faire en variante vers l'axe radial du pôle lorsqu'on s'éloigne de l'axe de rotation, autrement dit le décalage se fait en direction de l'axe radial du pôle lorsque l'on se rapproche du sommet du pôle.

Il est particulièrement avantageux de procéder à un tel décalage des axes longitudinaux des ponts de matière, notamment lorsque les logements d'une rangée sont disposés en U et que les branches latérales de chaque U sont plus longues que la branche centrale, ou en variante lorsque les branches latérales sont les seules à comporter un aimant permanent et que les logements correspondant à la branche centrale ne comportent pas d'aimant permanent.

Le décalage peut être inférieur à la plus grande largeur des ponts.

La masse rotorique peut être formée d'un empilement de tôles ou d'une ou plusieurs tôle(s) individuelle(s) enroulée(s) sur elle(s)-même(s) autour de l'axe de rotation. Chaque couche de tôle de la masse rotorique peut être d'un seul tenant. Le rotor peut être dépourvu de pièces polaires individuelles.

Le rotor peut comporter un nombre de pôles compris entre 2 et 12, mieux entre 4 et 8.

L'invention a encore pour objet, selon un autre de ses aspects, une machine électrique tournante comportant un rotor tel que décrit plus haut. La machine peut être à reluctance. Elle peut constituer un moteur synchrone.

La machine peut fonctionner à une vitesse périphérique nominale (vitesse tangentielle prise au diamètre extérieur du rotor) qui peut être supérieure ou égale à 100 mètres par seconde, la machine selon l'invention permettant un fonctionnement à des vitesses importantes si cela est souhaité.

La machine peut avoir une taille relativement élevée. Le diamètre du rotor peut être supérieur à 50 mm, mieux supérieur à 80 mm, étant par exemple compris entre 80 et 300 mm.

L'invention pourra être mieux comprise à la lecture de la description détaillée qui va suivre, d'exemples de réalisation non limitatifs de celle-ci, et l'examen du dessin annexé, sur lequel :
- la figure 1 est une vue schématique et partielle d'un rotor conforme à l'invention,
- la figure 2 en représente un détail de réalisation,
- la figure 3 est une vue schématique et partielle faisant apparaître l'axe longitudinal d'un pont de matière,
- les figures 4 et 5 sont des vues analogues à la figure 2 de variantes de réalisation,
- la figure 6 illustre le coefficient de sécurité en fatigue pour les configurations des figures 2, 4 et 5,
- les figures 7 et 7a sont des vues analogues à la figure 2 de variantes de réalisation, la direction d'aimantation des aimants étant matérialisée par une flèche,
- la figure 8 est une vue schématique et partielle illustrant le décalage entre les axes longitudinaux des ponts de matière,
- la figure 9 en est une vue de détail selon IX, et
- les figures 10 à 13 sont des vues schématiques et partielles, analogues à la figure 2, de variantes de réalisation.

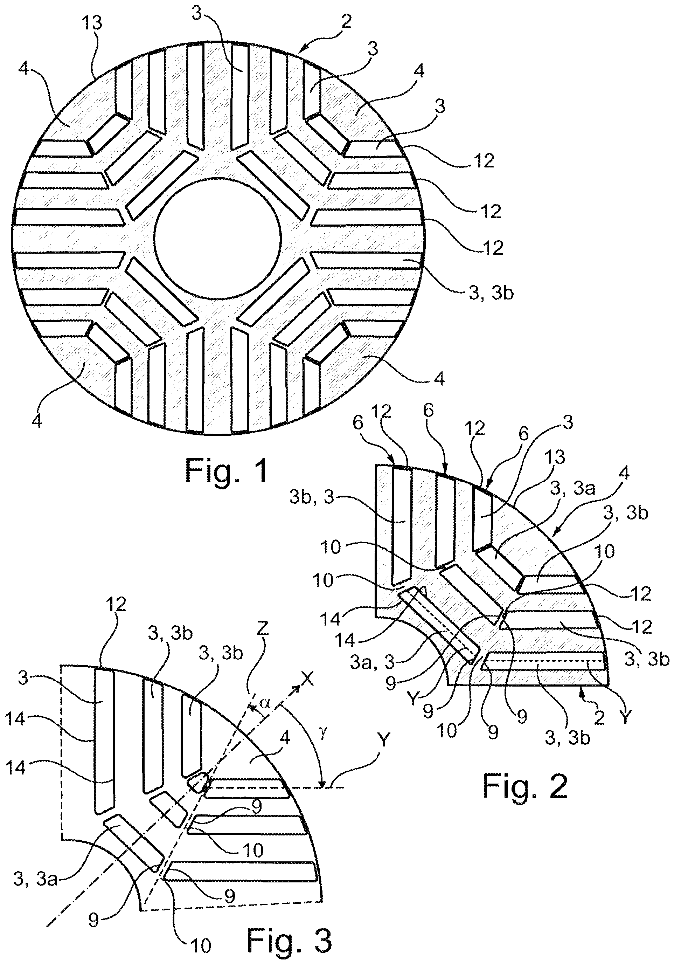

On a illustré aux figures 1 à 3 un rotor 1 de machine électrique tournante, comportant une masse rotorique 2 dans laquelle sont ménagés des logements 3 de manière à définir les pôles 4 du rotor, chaque pôle ayant un axe radial X.

Dans cet exemple, le rotor comporte neuf logements par pôle, qui sont disposés en trois rangées concentriques 6 autour de chacun des pôles, la concavité des rangées étant orientée vers l'entrefer. Une rangée 6 comporte trois logements 3 disposés consécutivement dans la rangée. Les trois rangées 6 d'un même pôle sont de longueur décroissante lorsque l'on se déplace en direction de l'entrefer, la plus longue étant située du côté de l'axe de rotation et la plus courte du côté de l'entrefer.

Les logements 3 sont de forme allongée, s'étendant chacun selon un axe longitudinal Y qui forme un angle γ avec l'axe radial X du pôle. Ils comportent chacun deux petits côtés 9, les petits côtés respectifs 9 de deux logements consécutifs 3 d'une même rangée 6 définissant entre eux un pont de matière 10.

Le pont de matière 10 s'étend généralement selon un axe longitudinal Z du pont orienté en rapprochement de l'axe radial X du pôle correspondant du rotor 1 lorsque l'on s'éloigne de l'axe de rotation. L'axe longitudinal Z du pont de matière 10 est rectiligne et forme avec l'axe radial X du pôle correspondant du rotor un angle α d'une valeur non nulle et supérieure à 5°, qui est dans cet exemple de l'ordre d'environ 15°.

Les petits côtés 9 d'un logement sont orientés en direction de l'axe radial X du pôle lorsque l'on se déplace en direction de l'entrefer. Les logements 3 sont de forme générale trapézoïdale, et ont deux grands côtés 14, l'un des grands côtés étant plus petit que l'autre, le plus court des grands côtés étant plus près de l'entrefer que le plus long des grands côtés.

Le rotor 1 comporte deux fois plus de ponts de matière que de rangées de logements, chaque rangée 6 comportant trois logements 3 et deux ponts de matière 10. Le nombre de ponts de matière 10 dans un pôle 4 est égal au nombre de logements dans le pôle, auquel on soustrait le nombre de rangées 6 dans ledit pôle. Chaque rangée 6 comporte un logement central 3a et deux logements latéraux 3b. La disposition des logements et des ponts de matière dans une rangée est symétrique par rapport à l'axe radial X du pôle.

Les logements latéraux sont séparés de l'entrefer par des ponts tangentiels 12.

Ces ponts tangentiels ne reprennent qu'une partie assez faible des efforts centrifuges, tandis que les ponts 10 qui séparent deux logements doivent supporter l'essentiel de la charge des efforts centrifuges.

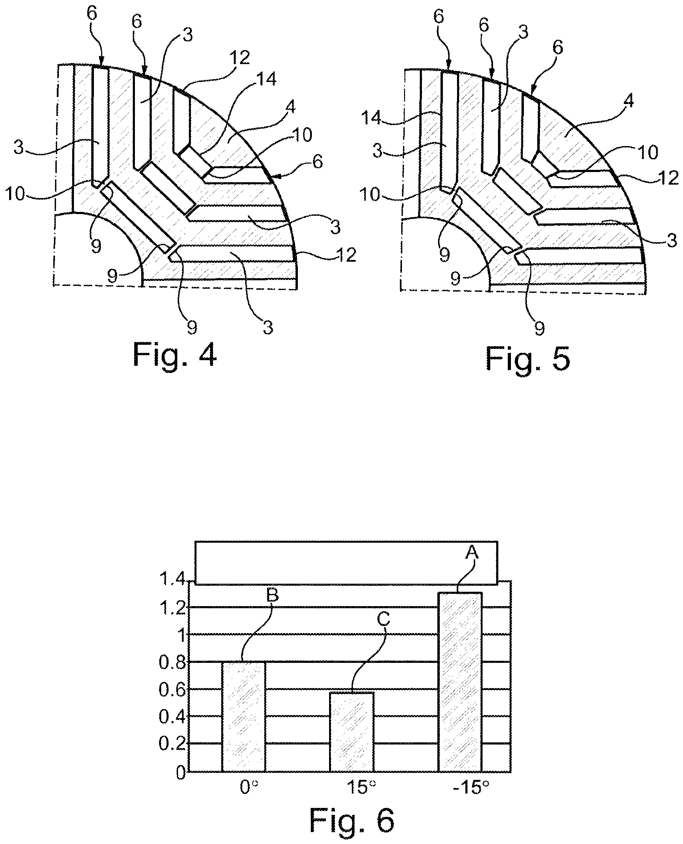

Pour faire apparaître les avantages de l'invention en termes de sécurité en fatigue, on a illustré à la figure 6 le coefficient de sécurité en fatigue qui traduit l'effort centrifuge que peut supporter le rotor, lorsqu'il est infiniment répété, en fonction de l'angle α. Il évolue en raison inverse de la contrainte au point le plus sollicité dans la structure. Le coefficient A correspondant à la configuration de la figure 2 est comparé aux coefficients B et C des configurations des figures 4 et 5, pour lesquels l'angle α est respectivement nul, les axes des ponts de matière 10 étant parallèles à l'axe radial X du pôle, et de 15° dans le sens opposé, les axes des ponts de matière 10 étant orientés en éloignement de l'axe radial X du pôle correspondant du rotor 1 lorsque l'on se déplace en direction de l'entrefer 11. On voit que le coefficient de sécurité en fatigue est maximum pour la configuration selon l'invention, où l'axe Z est orienté en rapprochement de l'axe X du pôle correspondant lorsque l'on se rapproche de l'entrefer.

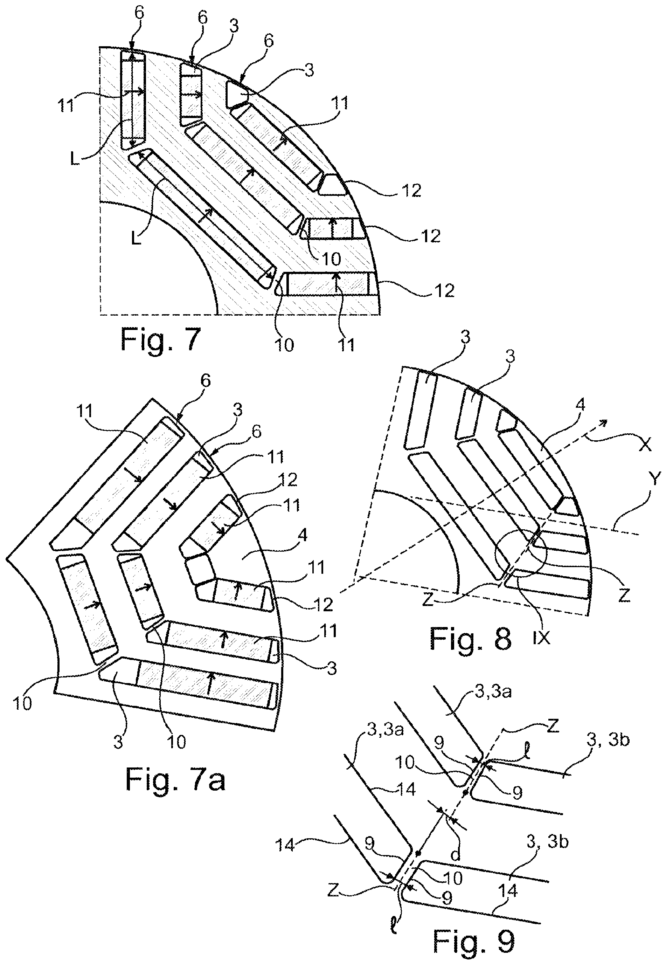

Le rotor 1 peut comporter des aimants permanents 11 insérés dans chacun des logements, les aimants n'étant pas représentés sur la figure 1 mais visibles sur la figure 7, leur direction d'aimantation étant illustrée par des flèches. Les aimants permanents sont dans cet exemple de forme générale rectangulaire en section transversale. La mise en place des aimants dans les logements peut laisser un espace libre 15 dans chaque logement entre l'aimant et les petits côtés du logement correspondant. L'espace libre peut être de forme générale triangulaire, comme illustré.

En variante, certains des logements peuvent être dépourvus d'aimant. Dans l'exemple de réalisation illustré à la figure 7, les logements de l'une des rangées sont disposés en une branche centrale et deux branches latérales, la branche centrale étant seule à comporter un aimant permanent, les logements latéraux ne comportant pas d'aimant permanent. Dans l'exemple de la figure 7a, c'est le contraire.

En outre, on voit sur la figure 7 que les logements centraux d'une rangée peuvent avoir une longueur L supérieure à celle des logements latéraux de ladite rangée, ainsi les branches latérales du U sont plus courtes que la branche centrale. C'est également le contraire dans l'exemple de la figure 7a.

Les figures 7 et 7a diffèrent également de la figure 1 par le fait que les ponts de matière 10 des différentes rangées y ont une largeur *l* variable, allant en diminuant lorsque l'on se rapproche de l'entrefer 13.

En outre, sur la figure 7, les axes longitudinaux de deux ponts de matière de deux rangées différentes sont parallèles entre eux et décalés d'une distance d non nulle, par exemple d'environ 1,5 mm, ce décalage ayant lieu en s'éloignant de l'axe radial lorsque l'on s'éloigne de l'axe de rotation. La distance *d* est mesurée perpendiculairement auxdits axes longitudinaux Z. Les axes Z des ponts ont été illustrés à la figure 8, et le décalage *d* entre eux à la figure 9.

Dans le mode de réalisation de la figure 7a, le décalage des axes longitudinaux des ponts peut se faire en variante vers l'axe radial du pôle lorsqu'on s'éloigne de l'axe de rotation, autrement dit le décalage se fait en direction de l'axe radial du pôle lorsque l'on se rapproche du sommet du pôle.

Au contraire, dans le mode de réalisation de la figure 1, les axes longitudinaux de deux ponts de matière de deux rangées différentes sont parallèles entre eux et confondus, lorsque l'on est d'un même côté de l'axe X.

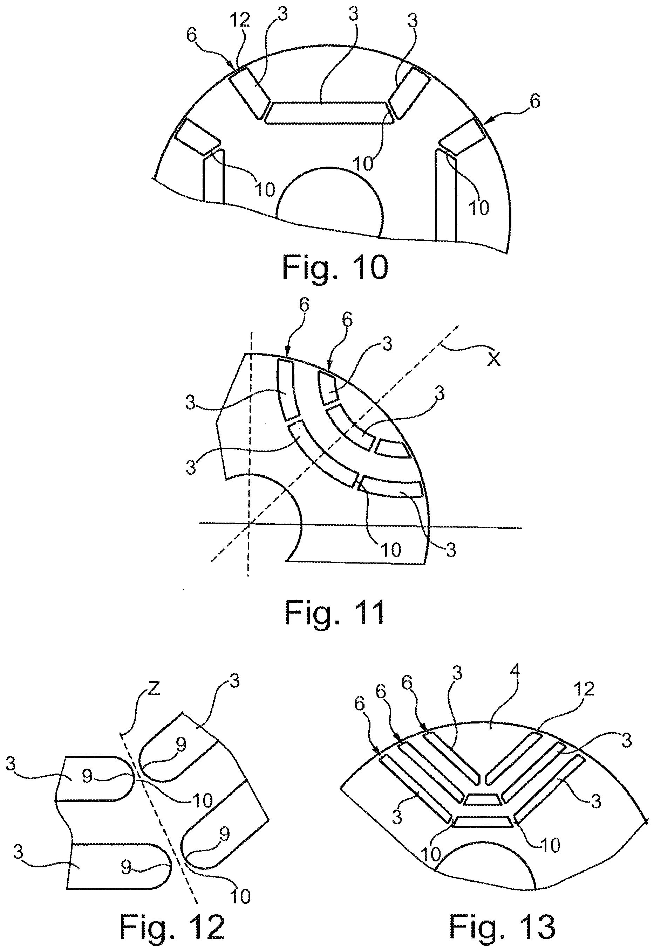

Le rotor peut comporter une seule rangée de logements par pôle, comme illustré à titre d'exemple à la figure 10.

Les logements peuvent s'étendre chacun selon un axe longitudinal qui peut être rectiligne, comme illustré précédemment, ou courbe, comme illustré à la figure 11.

Les petits côtés d'un logement peuvent être rectilignes, comme illustré précédemment, ou courbes, comme illustré à la figure 12.

Toutes les rangées peuvent comporter le même nombre de logements, comme décrit précédemment. On ne sort pas du cadre de la présente invention s'il en est autrement. A titre d'exemple on a illustré à la figure 13 un exemple de réalisation dans lequel deux rangées d'un même pôle ont un nombre de logements différent. Par exemple, comme illustré, une rangée de logements en comporte deux, à savoir la rangée la plus proche de l'entrefer, et les autres rangées comportent trois logements.

De plus, dans ce mode de réalisation, la rangée la plus proche de l'entrefer comporte deux logements disposés en V. Dans cette rangée, le pont 10 est ainsi central. Les deux autres rangées comportent chacune trois logements disposés en U évasé, avec chacune deux ponts de matière 10 symétriques par rapport à l'axe radial X du pôle.

L'invention n'est pas limitée aux exemples illustrés. On peut notamment modifier la polarité du rotor sans sortir du cadre de la présente invention.

Le rotor peut coopérer avec tout type de stator, à bobinage distribué ou concentré.

L'expression « comportant un » doit être comprise comme étant synonyme de « comportant au moins un ».

## Revendications

1. Rotor (1) de machine électrique tournante, comportant une masse rotorique (2) dans laquelle sont ménagés des logements (3) de manière à définir les pôles (4) du rotor, notamment au moins trois logements par pôle, chaque pôle ayant un axe radial (X) du pôle,
les logements (3) étant de forme allongée et comportant chacun deux petits côtés (9), les logements étant disposés en plusieurs rangées (6) par pôle, les logements dans une rangée étant disposés en U, une rangée (6) comportant au moins trois logements (3) disposés consécutivement, leurs petits côtés (9) définissant entre deux logements consécutifs d'une même rangée un pont de matière (10),
ce pont de matière (10) s'étendant généralement selon un axe longitudinal (Z) du pont orienté en rapprochement de l'axe radial (X) du pôle correspondant du rotor, lorsque l'on s'éloigne de l'axe de rotation,
rotor dans lequel
a) (i) les branches latérales de chaque U sont plus courtes que la branche centrale ou (ii) la branche centrale est la seule à comporter un aimant permanent et les logements correspondant aux branches latérales ne comportent pas d'aimant permanent, et
b) le décalage des axes longitudinaux des ponts se fait vers l'axe radial du pôle lorsque l'on se rapproche de l'axe de rotation.

2. Rotor selon la revendication 1, comportant des aimants permanents (11) insérés dans certains au moins desdits logements.

3. Rotor selon l'une des revendications précédentes, dans lequel le pont de matière (10) s'étend généralement selon un axe longitudinal (2) du pont qui forme avec un axe radial (X) du pôle correspondant du rotor un angle (a) d'une valeur non nulle et supérieure à 5°, mieux supérieure à 10°.

4. Rotor selon l'une quelconque des revendications précédentes, au moins une rangée (4) comportant un nombre impair de logements (3), notamment au moins trois logements.

5. Rotor selon l'une quelconque des revendications précédentes, dans lequel, lorsque le rotor (1) comporte pour un même pôle (4) plusieurs rangées (6), ces dernières sont de longueur décroissante lorsque l'on se déplace en direction de l'entrefer.

6. Rotor selon l'une quelconque des revendications précédentes, la disposition des logements (3) et/ou des ponts de matière (10) dans une rangée étant symétrique par rapport à l'axe radial (X) du pôle.

7. Rotor selon l'une quelconque des revendications précédentes, le pont de matière (10) ayant une largeur (*l*), mesurée perpendiculairement à son axe longitudinal, inférieure à 8 mm.

8. Rotor selon l'une quelconque des revendications précédentes, le pont de matière (10) ayant une largeur (*l*), mesurée perpendiculairement à son axe longitudinal, supérieure à 0,5 mm.

9. Rotor selon l'une quelconque des revendications précédentes, les axes longitudinaux (Z) de deux ponts de matière (10) de deux rangées différentes (6) étant parallèles entre eux.

10. Rotor selon la revendication précédente, les axes longitudinaux (Z) de deux ponts de matière (10) de deux rangées différentes (6) étant décalés d'une distance (d) comprise entre 0 et 10 mm.

11. Rotor selon l'une quelconque des revendications précédentes, dans lequel les logements (3) sont de forme générale trapézoïdale, le plus court des grands côtés (14) du logement étant plus près de l'entrefer que le plus long des grands côtés.

12. Rotor selon l'une quelconque des revendications précédentes, le nombre de ponts (10) orientés obliquement dans un pôle (4) étant égal au nombre de logements dans le pôle, auquel on soustrait le nombre de rangées dans ledit pôle.

13. Rotor selon l'une quelconque des revendications précédentes, la masse rotorique (2) étant formée d'un empilement de couches de tôle, chaque couche de tôle de la masse rotorique étant d'un seul tenant.

14. Rotor selon l'une quelconque des revendications précédentes, les petits cotés d'un logement étant rectilignes, dans lequel le pont de matière (10) s'étend généralement selon un axe longitudinal (2) du pont qui forme avec un axe radial (X) du pôle correspondant du rotor un angle (α) d'une valeur inférieure à 30°.

15. Machine électrique tournante comportant un rotor (1) selon l'une quelconque des revendications précédentes.
